# EUROPEAN PATENT APPLICATION

(11) **EP 4 851 558 A2**
(43) Date of publication of application: **09.12.2026**
(21) Application number: 26207462.8
(22) Date of filing: 20.08.2020
(51) Int. Cl.: F25B 5/04

(54) **NON-AZEOTROPIC MIXED REFRIGERANT AND REFRIGERATING APPARATUS USING NON-AZEOTROPIC MIXED REFRIGERANT**

(30) Priority: 21.08.2019 KR 20190102358
(62) Document number(s) of the earlier application(s) in accordance with Art. 76 EPC: 20855753.8 / 4 017 932
(71) Applicant: LG Electronics Inc., Yeongdeungpo-gu Seoul 07336 (KR)
(72) Inventor: Seo, Changho, 08592 Seoul (KR); Kim, Kyeongyun, 08592 Seoul (KR); Park, Yongjoo, 08592 Seoul (KR); Song, Minho, 08592 Seoul (KR)
(74) Representative: Vossius & Partner Patentanwälte Rechtsanwälte mbB

(57) **Abstract**

A non-azeotropic mixed refrigerant and a refrigerating apparatus using a non-azeotropic mixed refrigerant are provided. The non-azeotropic mixed refrigerant may include isobutane and propane. The non-azeotropic mixed refrigerant may be provided in a weight ratio of 50% ≤ isobutane ≤ 90%. Therefore, high efficiency may be obtained in a refrigerating system using the non-azeotropic mixed refrigerant.

## Description

### Technical Field

A non-azeotropic mixed refrigerant and a refrigerating apparatus using a non-azeotropic mixed refrigerant are disclosed herein.

### Background Art

A refrigerating apparatus has a cavity, an inner space of which is maintained at a low temperature. In the refrigerating apparatus, a refrigeration cycle is provided so as to maintain the cavity at a low temperature. In the refrigeration cycle, a refrigerant circulates through processes of compression, condensation, expansion, and evaporation.

There are various types of refrigerants. A mixed refrigerant is a refrigerant in which two or more types of refrigerants are mixed. Mixed refrigerants include azeotropic mixed refrigerant and non-azeotropic mixed refrigerant.

The azeotropic mixed refrigerant is a refrigerant that changes phase without changing a composition of a gas phase and a liquid phase, similar to a single refrigerant. An evaporation temperature of the azeotropic mixed refrigerant is constant between an inlet and an outlet of the evaporator.

In the non-azeotropic mixed refrigerant, a refrigerant having a low boiling point evaporates first, and a refrigerant having a high boiling point evaporates later. Therefore, the non-azeotropic mixed refrigerant has different gas phase and liquid phase compositions during evaporation, and the evaporation temperature is low at the inlet of the evaporator and high at the outlet of the evaporator.

The non-azeotropic mixed refrigerant has a gliding temperature difference (GTD), which is a characteristic in which the temperature changes at equal pressure during phase change. When the non-azeotropic mixed refrigerant is used, the temperature rises when evaporation occurs at equal pressure, and conversely, the temperature decreases during condensation at equal pressure. In other words, the gliding temperature difference of the refrigerant occurs when the state changes from a saturated liquid to a saturated gas.

A thermal efficiency of a heat exchanger may be improved using this phenomenon. For example, the non-azeotropic mixed refrigerant may form a Lorentz cycle in which a temperature between a refrigerant and a heat source is balanced, and efficiency may be improved by reducing irreversible heat exchange.

As an existing technique for applying the non-azeotropic mixed refrigerant, Applicant proposed a capillary structure of a refrigerating apparatus in Korean Patent Registration No. 0119839, which is hereby incorporated by reference.

### Disclosure of Invention

### Technical Problem

Thermal efficiency may be improved using the non-azeotropic mixed refrigerant. Nevertheless, optimal compositions of non-azeotropic mixed refrigerants suitable for refrigeration cycles applied to refrigerating apparatuses are not known.

### Solution to Problem

According to embodiments disclosed herein, a non-azeotropic mixed refrigerant may include isobutane and propane so as to be used as a refrigerant in a refrigeration cycle, the non-azeotropic mixed refrigerant provided in a weight ratio of 50% ≤ isobutane ≤ 90%. According to embodiments disclosed herein, as an optimal refrigerant mixture is used, compression work of a compressor may be minimized, irreversible loss may be minimized, and efficiency of a refrigeration cycle may be improved.

As a gliding temperature difference of the non-azeotropic mixed refrigerant may be greater than 4°C, irreversible loss occurring during heat exchange of an evaporator may be reduced to improve efficiency of the refrigeration cycle. As the non-azeotropic mixed refrigerant may be limited to a weight ratio of 75% ≤ isobutane ≤ 90%, refrigeration cycles may be constructed through an evaporator and a condenser each having an appropriate size.

As a gliding temperature difference of the non-azeotropic mixed refrigerant may be 4.1°C to 7.2°C, optimal heat exchange efficiency realized by the non-azeotropic mixed refrigerant may be achieved. As the non-azeotropic mixed refrigerant may be provided in a weight ratio of 75% ≤ isobutane ≤ 87%, an optimal temperature difference between an inlet and an outlet of an evaporator may be realized.

As the non-azeotropic mixed refrigerant may be provided in a weight ratio of 76% ≤ isobutane ≤ 87%, a refrigeration cycle that may reduce material costs may be realized by making components compatible with components of the refrigerating apparatus, heat capacity of the refrigerating apparatus, and optimal fan size.

Embodiments disclosed herein provide a refrigerating apparatus that may include a refrigeration cycle having a compressor, an expander, a condenser, and an evaporator. The non-azeotropic mixed refrigerant circulating in the refrigeration cycle may include at least two types of hydrocarbons. The at least two types of hydrocarbons may include at least one first hydrocarbon selected from an upper group having an evaporation temperature of -12°C or more at 1 bar, and at least one second hydrocarbon selected from a middle group having an evaporation temperature of -50°C or more and less than - 12°C at 1 bar. Therefore, an optimal non-azeotropic mixed refrigerant used for circulation in the refrigeration cycle may be obtained.

As a temperature of the non-azeotropic mixed refrigerant at an outlet of the evaporator may be lower than a temperature of air introduced into the evaporator, an entire area of the evaporator may be used for evaporation of the refrigerant and a temperature reversal of the refrigerant and air in the evaporator may be prevented. As a gliding temperature difference of the non-azeotropic mixed refrigerant may be greater than a temperature difference between an inlet and an outlet of air passing through the evaporator, efficiency of the evaporator may be increased and irreversible loss may be reduced.

The at least one first hydrocarbon may be at least one hydrocarbon selected from isopentane, 1,2-butadiene, butene, and isobutane. Therefore, a refrigerating apparatus having a high refrigeration cycle efficiency may be obtained. As the at least one first hydrocarbon may be at least one hydrocarbon selected from N-butane and isobutane, compatibility of components may be high, and thus, manufacturing costs of the refrigerating apparatus using the non-azeotropic mixed refrigerant may be reduced.

The non-azeotropic mixed refrigerant may include the at least one first hydrocarbon and the at least one second hydrocarbon, the at least one first hydrocarbon may be isobutane, and the at least one second hydrocarbon may be propane. Therefore, an optimal gliding temperature difference may be obtained in the refrigeration cycle of the refrigerating apparatus using the non-azeotropic mixed refrigerant.

As the non-azeotropic mixed refrigerant may be provided in a weight ratio of 76% ≤ isobutane ≤ 87%, optimization of compression work of the compressor, compatibility of components, reduction of irreversible loss, stability of handling, and stability during leakage may be increased. As a pressure difference (△P) of the non-azeotropic mixed refrigerant between the condenser and the evaporator may be 340 kPa < △P < 624.7 kPa, compression work of the compressor using the non-azeotropic mixed refrigerant may be optimized and efficiency of the refrigeration cycle may be increased.

As a condensing pressure (Pd) of the non-azeotropic mixed refrigerant may be 393.4 kPa < Pd < 745.3 kPa, compression work of the compressor using the non-azeotropic mixed refrigerant may be optimized and efficiency of the refrigeration cycle may be increased. As an evaporation pressure (Ps) of the non-azeotropic mixed refrigerant may be 53.5 kPa < Pd < 120.5 kPa, compression work of the compressor using the non-azeotropic mixed refrigerant may be optimized and efficiency of the refrigeration cycle may be increased.

As a weight ratio of the isobutane may be greater than a weight ratio of the propane, compression work of the compressor may be reduced while increasing advantages of the non-azeotropic mixed refrigerant. As a temperature difference between an inlet and an outlet of the evaporator may be 3°C to 5°C, an exchange performance corresponding to size and shape of the refrigerating apparatus may be obtained.

According to embodiments disclosed herein, a non-azeotropic mixed refrigerant may include at least two types of hydrocarbons, and the at least two types of hydrocarbons may include at least one first hydrocarbon selected from an upper group having an evaporation temperature of -12°C or more at 1 bar, and at least one second hydrocarbon selected from a middle group having an evaporation temperature of -50°C or more and less than -12°C at 1 bar. Therefore, an optimal combination of non-azeotropic mixed refrigerants for industrial application may be obtained.

As a gliding temperature difference of the non-azeotropic mixed refrigerant upon evaporation may be 4°C or more, an optimal refrigeration cycle may be realized while reducing irreversible loss. As a weight ratio of the at least one first hydrocarbon may be 50% or more, compression work of the compressor provided in the refrigeration cycle may be minimized.

As the at least one first hydrocarbon may be isobutane, the at least one second hydrocarbon may be propane, and the non-azeotropic mixed refrigerant may be provided in a weight ratio of 50% ≤ isobutane ≤ 90%, evaporation temperatures of evaporators divided into two stages may be optimized, thereby reducing irreversible loss and increasing efficiency of the refrigeration cycle.

### Advantageous Effects of Invention

According to embodiments disclosed herein, it is possible to obtain a non-azeotropic mixed refrigerant capable of obtaining a highest efficiency of a refrigeration cycle and a refrigerating apparatus using an non-azeotropic mixed refrigerant.

### Brief Description of Drawings

Fig. 1 is a schematic temperature graph of a non-azeotropic mixed refrigerant and air in a counterflow evaporator;
Fig. 2 is a graph showing a temperature difference between an inlet and an outlet of an evaporator and a gliding temperature difference of a non-azeotropic mixed refrigerant according to compositions of isobutane and propane;
Fig. 3A is a graph showing a refrigeration cycle when isobutane is used as a refrigerant;
Fig. 3B is a graph showing a refrigeration cycle when a non-azeotropic mixed refrigerant is used as a refrigerant; and
Fig. 4 is a view showing a refrigerating apparatus according to an embodiment.

### Best Mode for Carrying out the Invention

Hereinafter, embodiments will be described with reference to the accompanying drawings. The embodiments are not limited to the embodiments discussed hereinafter, and those skilled in the art who understand the spirit will be able to easily propose other embodiments falling within the scope by adding, modifying, and deleting components. However, this also falls within the spirit.

In the following description, contents are divided into technical elements and described. First, a process of selecting a type of a non-azeotropic mixed refrigerant will be described.

### Selection of type of non-azeotropic mixed refrigerant

Refrigerants to be mixed, which are suitable for the non-azeotropic mixed refrigerant, are proposed. As the refrigerant to be mixed, a hydrocarbon-based (HC-based) refrigerant may be selected. Hydrocarbon-based refrigerant is an eco-friendly refrigerant having a low ozone depletion potential (ODP) and a low global warming potential (GWP). The criteria for selecting a refrigerant suitable for the non-azeotropic mixed refrigerant among hydrocarbon-based refrigerants may be summarized as follows.

First, from a viewpoint of compression work, when a difference (pressure difference (△P)) between a condensing pressure (Pd or p1) and an evaporation pressure (Ps or p2) is smaller, compression work of the compressor is further reduced, which is advantageous for efficiency. Therefore, refrigerants having a low condensing pressure and a high evaporation pressure may be selected. However, considering reliability of compressors, an evaporation pressure of 50 kPa or more may be selected.

Second, from a viewpoint of utilization of production facilities, refrigerants may be selected which have been used in the past for compatibility of existing facilities and components. Third, from a viewpoint of purchase costs of refrigerants, refrigerants obtainable at low cost may be selected. Fourth, from a viewpoint of safety, refrigerants that are not harmful to humans when refrigerant leaks may be selected.

Fifth, from a viewpoint of reducing irreversible loss, reduction of a temperature difference between a refrigerant and cold air so as to increase efficiency of a cycle is desirable. Sixth, from a viewpoint of handling, refrigerants that can be conveniently handled at a time of work and may be conveniently injected by handlers may be selected.

The above criteria for selecting the refrigerants is variously applied in selecting the non-azeotropic mixed refrigerant.

### Classification and selection of hydrocarbons

Based on evaporation temperature (Tv), candidate refrigerants suggested by the National Institute of Standards and Technology are classified into three (upper, middle, and lower) groups in descending order of evaporation temperature. A density of refrigerant is higher as evaporation temperature increases.

A combination of candidate refrigerants capable of exhibiting an evaporation temperature of -20°C to -30°C suitable for the environment of refrigerating apparatuses may be selected. Hereinafter, classification of the candidate refrigerants will be described.

The candidate refrigerants are classified into three types based on boundary values of evaporation temperature, that is, -12°C and -50°C. The candidate refrigerants classified into the three types are shown in Table 1. It can be seen that the classification of the evaporation temperature changes greatly based on the boundary values.

**[Table 1]**

| No. | group | Hydrocarbon name | Evaporation temperature(1 bar) | Evaporation temperature(20 bar) | Triple point temperature |
|---|---|---|---|---|---|
| | | | °C | | |
| 1 | upper | isopentane | 27.5 | 154.7 | -159.85 |
| 2 | | 1,2-butadiene | 10.3 | 124.8 | -136.25 |
| 3 | | n-butane | -0.9 | 114.5 | -138.25 |
| 4 | | butene | -6.6 | 105.8 | -185.35 |
| 5 | | isobutane | -12 | 100.7 | -159.65 |
| 6 | middle | propadiene | -34.7 | 68.2 | -136.25 |
| 7 | | propane | -42.4 | 57.3 | -187.71 |
| 8 | | propylene | -47.9 | 48.6 | -185.26 |
| 9 | lower | ethane | -88.8 | -7.2 | -182.80 |
| 10 | | ethylene | -104 | -29.1 | -169.15 |

Referring to Table 1, refrigerants that may be mixed as the non-azeotropic mixed refrigerant may be selected and combined in each region. First, which group is selected among the three groups will be described. There may be one case in which refrigerants are selected from the three groups and three refrigerants are mixed, and three cases in which refrigerants are selected from two groups and two refrigerants are mixed.

When at least one refrigerant is selected from each of the three groups and three or more refrigerants are mixed, the temperature rise and drop in the non-azeotropic mixed refrigerant may be excessively great. In this case, design of the refrigerating system may be difficult.

Thus, the non-azeotropic mixed refrigerant may be obtained by selecting at least one refrigerant from each of two groups. At least one refrigerant may be selected from each of the middle group and the lower group, from each of the upper group and the middle group, and from each of the upper group and the lower group. Among them, a composition in which at least one refrigerant selected from each of the upper group and the middle group is mixed may be provided as the non-azeotropic mixed refrigerant.

When at least one refrigerant selected from each of the middle group and the lower group is mixed, the evaporation temperature of the refrigerant is excessively low. Thus, a difference between interior temperature and the evaporation temperature of the refrigerant is excessively great in a general refrigerating apparatus. Therefore, efficiency of the refrigeration cycle deteriorates and power consumption increases.

When at least one refrigerant selected from each of the upper group and the lower group is mixed, a difference in evaporation temperature between the at least two refrigerants is excessively great. Therefore, unless a special high-pressure environment is created, each refrigerant is classified into a liquid refrigerant and a gaseous refrigerant under actual use conditions. For this reason, it is difficult to inject the at least two refrigerants together into a refrigerant pipe.

### Selection of hydrocarbons in groups of hydrocarbons

Which refrigerant is selected from the upper group and the middle group will be described hereinafter.

First, the refrigerant selected from the upper group will be described. At least one refrigerant selected from the upper group may be used as the non-azeotropic mixed refrigerant.

As isopentane and butadiene have a relatively high evaporation temperature, the inner temperature of the evaporator of the refrigerating apparatus is limited and freezing efficiency deteriorates. Isobutane and N-butane may be used without changing components of the refrigeration cycle, such as the compressor of the refrigerating apparatus, currently used. Therefore, their use is most expected among the refrigerants included in the upper group.

N-butane has a smaller compression work than isobutane, but has a low evaporation pressure (Ps), which may cause a problem in the reliability of the compressor. For this reason, isobutane may be selected from the upper group. As described above, selection of at least one from the other hydrocarbons included in the upper group is permissible.

The refrigerant selected from the middle group will be described hereinafter. At least one refrigerant selected from the middle group may be used in the non-azeotropic mixed refrigerant.

As propadiene has a smaller pressure difference (△P) than that of propane, efficiency is high. However, propadiene is expensive and harmful to respiratory systems and skin when humans inhale due to leakage. Propylene has a greater pressure difference than that of propane, and thus, compression work of the compressor is increased.

For this reason, propane may be selected from the middle group. As described above, selection of at least one from the other hydrocarbons included in the middle group is permissible.

For reference, isobutane may also be referred to as R600a, and propane may also be referred to as R290. Although isobutane and propane may be selected, other hydrocarbons belonging to the same group may be applied in obtaining properties of the non-azeotropic mixed refrigerant, even where there is no specific mention in the following description. For example, if it is possible to obtain a similar gliding temperature difference of the non-azeotropic mixed refrigerant, other compositions than isobutane and propane may be used.

### Selection of ratio of selected hydrocarbon refrigerant, considering power consumption of compression work

As the refrigerant to be mixed in the non-azeotropic mixed refrigerant, isobutane is selected from the upper group and propane is selected from the middle group. Ratios of the refrigerants to be mixed in the non-azeotropic mixed refrigerant may be selected as follows.

Power consumption of the compressor, which is a main energy consumption source of the refrigerating system, depends on the pressure difference. In other words, as the pressure difference is increases, more compression work needs to be consumed. As the compression work increases, efficiency of the cycle further deteriorates.

Isobutane has a smaller pressure difference (△P) than that of propane. For this reason, the non-azeotropic mixed refrigerant may be provided with a weight ratio of isobutane of 50% or more and a weight ratio of propane of 50% or less.

In the case of a composition in which the non-azeotropic mixed refrigerant includes isobutane and propane mixed at a ratio of 5:5, the condensing pressure is 745.3 kPa, the evaporation pressure is 120.5 kPa, and the pressure difference is 624.7 kPa. In the case of a composition in which the non-azeotropic mixed refrigerant is substantially isobutane with a very small amount of propane, the condensing pressure is 393.4 kPa, the evaporation pressure is 53.5 kPa, and the pressure difference is 340.0 Pa.

The pressure is obtained by measuring an average value when the compressor is turned on under ISO power consumption measurement conditions. All values related to the composition of the non-azeotropic mixed refrigerant are obtained under the same conditions.

Ranges of the condensing pressure, the evaporation pressure, and the pressure difference of the non-azeotropic mixed refrigerant may be known using a mixing ratio of isobutane to propane that can reduce the compression work as described above.

### Selection of ratio of selected hydrocarbon refrigerant, considering irreversible loss of evaporator

As described above, the non-azeotropic mixed refrigerant has a gliding temperature difference (GTD) upon phase change. Using the gliding temperature difference, evaporators may be sequentially installed in a freezer compartment and a refrigerating compartment to provide an appropriate temperature atmosphere for each partitioned space. According to the gliding temperature difference, a temperature difference between air and refrigerant evaporated in each evaporator may be reduced, thereby reducing irreversibility occurring during heat exchange. Reduction in irreversible loss may reduce the loss of the refrigerating system.

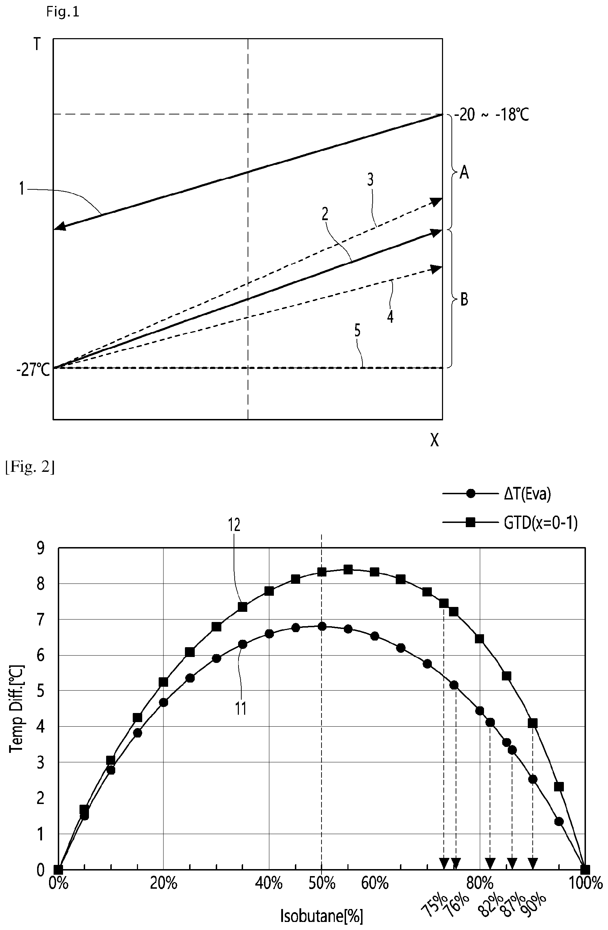

Fig. 1 is a schematic temperature graph of a non-azeotropic mixed refrigerant and air in a counterflow evaporator. In Fig. 1, the horizontal axis represents progress distance, and the air and the non-azeotropic mixed refrigerant move in opposite directions as indicated by arrows. In Fig. 1, the vertical axis represents temperature. Referring to Fig. 1, 1 is a line for air, 2 is a line for the non-azeotropic mixed refrigerant, 3 is a line for temperature rise of the non-azeotropic mixed refrigerant, 4 is a line for temperature drop of the non-azeotropic mixed refrigerant, and 5 is a line for a single refrigerant.

Referring to the line 1 for air, for example, the temperature of the air may drop from a range of -20°C to -18°C and the air may pass through the evaporator. Referring to the line 2 for the non-azeotropic mixed refrigerant, the temperature of the non-azeotropic mixed refrigerant may rise from -27°C and the non-azeotropic mixed refrigerant may pass through the evaporator. The gliding temperature difference of the non-azeotropic mixed refrigerant may change according to the ratio of isobutane to propane. When the gliding temperature difference is increased, the line 2 for the non-azeotropic mixed refrigerant may move toward the line 3 for the temperature rise of the non-azeotropic mixed refrigerant. When the gliding temperature difference is decreased, the line 2 for the non-azeotropic mixed refrigerant may move toward the line 4 for the temperature drop of the non-azeotropic mixed refrigerant. For reference, as there is no phase change in the single refrigerant, there is no temperature change in the line 5 for the single refrigerant.

Irreversible loss when heat exchange occurs cannot be avoided due to the temperature difference between two interfaces where heat exchange occurs. For example, when there is no temperature difference between interfaces of two objects that exchange heat with each other, there is no irreversible loss, but heat exchange does not occur.

However, there are various methods for reducing irreversible loss due to heat exchange. A representative method is to configure a heat exchanger with counterflow. A counterflow heat exchanger may reduce irreversible loss by allowing the temperature difference between moving fluids to be reduced as much as possible.

In the case of an evaporator to which the non-azeotropic mixed refrigerant is applied, the heat exchanger may be configured with counterflow as shown in Fig. 1. As the temperature of the non-azeotropic mixed refrigerant is increased during evaporation due to the gliding temperature difference, the temperature difference between the air and the non-azeotropic mixed refrigerant may be reduced. When the gliding temperature difference of the non-azeotropic mixed refrigerant and the temperature difference of the air are reduced, irreversible loss may be reduced and efficiency of the refrigeration cycle may be increased.

The gliding temperature difference of the non-azeotropic mixed refrigerant may not be increased infinitely due to limitations of the refrigerant. In addition, when the gliding temperature difference of the non-azeotropic mixed refrigerant is changed, the gliding temperature difference of the cold air is changed. Accordingly, a size of the evaporator is changed and total efficiency of the refrigeration cycle is affected. For example, when the gliding temperature difference is increased, the inlet temperature of the refrigerant is decreased or the outlet temperature of the refrigerant is overheated, thus reducing efficiency of the refrigeration cycle.

On the other hand, the gliding temperature difference of the non-azeotropic mixed refrigerant and the temperature difference of the air may converge to zero if a size of the heat exchanger is infinitely large. However, considering mass productivity and cost reduction of the heat exchanger, in the case of a general refrigerating apparatus, the gliding temperature difference of the non-azeotropic mixed refrigerant and the temperature difference of the air are about 3°C to 4°C.

Fig. 2 is a graph showing a temperature difference between an inlet and an outlet of an evaporator and a gliding temperature difference of a non-azeotropic mixed refrigerant according to compositions of isobutane and propane. The horizontal axis represents a content of isobutane, and the vertical axis represents a temperature difference.

Referring to Fig. 2, when isobutane and propane are each included in 100%, there is no temperature change while isobutane and propane undergo evaporation as a single refrigerant. When isobutane and propane are mixed, there are the gliding temperature difference of the non-azeotropic mixed refrigerant and the temperature difference between the inlet and the outlet of the evaporator. A temperature difference 11 between the inlet and the outlet of the evaporator is smaller than a gliding temperature difference 12 of the non-azeotropic mixed refrigerant. This may be caused by incomplete heat transfer between the refrigerant and air.

When the gliding temperature difference of the non-azeotropic mixed refrigerant is greater than the temperature difference between the inlet and the outlet of the evaporator, characteristics of the non-azeotropic mixed refrigerant may be well utilized. Also, it is advantageous from a viewpoint of reducing irreversibility in heat exchange and increasing efficiency of the refrigeration cycle. Likewise, the gliding temperature difference of the non-azeotropic mixed refrigerant may be greater than the temperature difference of the air passing through the evaporator.

In a general refrigerating apparatus, the temperature difference of the air passing through the inlet and the outlet of the evaporator may reach 4°C to 10°C. In most cases, the temperature difference of air is close to 4°C. For this reason, the gliding temperature difference of the non-azeotropic mixed refrigerant may be maintained higher than 4°C. Maintaining the gliding temperature difference to be at least 4.1°C or higher, which is minimally higher than the temperature difference between the inlet and the outlet of the evaporator, may be advantageous. When the gliding temperature difference of the non-azeotropic mixed refrigerant is less than 4.1°C, thermal efficiency of the refrigeration cycle may decrease.

In contrast, when the gliding temperature difference of the non-azeotropic mixed refrigerant is greater than 4.1°C, the temperature difference between the air and the refrigerant at the outlet side of the refrigerant decreases, irreversibility decreases, and thermal efficiency of the refrigeration cycle increases. That the temperature difference between the air and the refrigerant at the outlet side of the refrigerant decreases means that the line 2 for the non-azeotropic mixed refrigerant moves toward the line 3 for the temperature rise of the non-azeotropic mixed refrigerant in Fig. 1.

In Fig. 2, when the gliding temperature difference of the non-azeotropic mixed refrigerant is 4.1°C, isobutane is 90%, and when the gliding temperature difference of the non-azeotropic mixed refrigerant is greater than 4.1°C, isobutane is less than 90%. In order to minimize compression work of the compressor, isobutane may be 50% or more.

As a result, a weight ratio of the non-azeotropic mixed refrigerant provided as isobutane and propane may be expressed as in Equation 1. [Math.1] $50 % \leq isobutane \leq 90 %$

Propane is the remaining or other component in the weight ratio of the non-azeotropic mixed refrigerant.

As the gliding temperature difference of the non-azeotropic mixed refrigerant increases, irreversible loss may be reduced. However, when the gliding temperature difference is excessively great, a size of the evaporator becomes excessively large in order to secure a sufficient heat exchange passage between the refrigerant and the air. A space inside of the refrigerating apparatus may be secured when the evaporator applied to a general household refrigerating apparatus is designed with a capacity of 200 W or less. For this reason, the gliding temperature difference of the non-azeotropic mixed refrigerant may be limited to 7.2°C or less.

In addition, when the gliding temperature difference of the non-azeotropic mixed refrigerant is excessively great, the temperature of the inlet of the evaporator may be too low or the outlet of the evaporator outlet may be overheated too quickly, based on the non-azeotropic mixed refrigerant. An available area of the evaporator may be reduced and efficiency of the heat exchange may decrease.

At the outlet of the evaporator, the temperature of the non-azeotropic mixed refrigerant has to be higher than the temperature of the air introduced into the evaporator. Otherwise, efficiency of the heat exchanger decreases due to reversal of the temperatures of the refrigerant and air. When this condition is not satisfied, efficiency of the refrigerating system may be reduced.

In Fig. 2, when the gliding temperature difference of the non-azeotropic mixed refrigerant is 7.2°C, isobutane is 75%, and when the gliding temperature difference of the non-azeotropic mixed refrigerant is less than 7.2°C, isobutane is more than 75%. As a result, considering this condition and the condition of Equation 1 together, a weight ratio of the non-azeotropic mixed refrigerant provided as isobutane and propane may be expressed as in Equation 2. [Math.2] $75 % \leq isobutane \leq 90 %$

Propane is the remaining or other component in the weight ratio of the non-azeotropic mixed refrigerant.

Selection of ratio of selected hydrocarbon refrigerant, considering compatibility of

### production facilities and components

The temperature difference between the inlet and the outlet of the evaporator of a general refrigerating apparatus may be set to 3°C to 5°C. This is due to various factors, such components of the refrigerating apparatus, internal volume of the machine room, heat capacity of each component, and size of the fan, for example. When a composition ratio of the non-azeotropic mixed refrigerant capable of providing the temperature of the inlet and the outlet of the evaporator, that is, 3°C to 5°C, is found in Fig. 2, it can be seen that isobutane is between 76% and 87%.

As a result of the above discussion, the non-azeotropic mixed refrigerant that satisfies all of the above-described conditions may be expressed as Equation 3.$76 % \leq isobutane \leq 87 %$

Propane is the remaining or other component in the weight ratio of the non-azeotropic mixed refrigerant.

### Ratio of hydrocarbon refrigerant to be finally applied

The isobutane application range that can be selected on the basis of the various criteria described above may be determined to be 81% to 82%, which is the middle range of Equation 3. Propane may occupy the remaining portion or component of the non-azeotropic mixed refrigerant.

The case of using only isobutane was compared with the case of using the non-azeotropic mixed refrigerant in which 85% of isobutane and 15% of propane were applied. In both cases, the evaporators were constructed in parallel to form the cycle of the refrigerating system.

The experimental conditions were -29°C and -15°C and the inlet temperatures of the compressors were 25°C, respectively. Due to the difference in the refrigerant, the temperature of the condenser was 31°C when using only isobutane and 29°C when using the non-azeotropic mixed refrigerant.

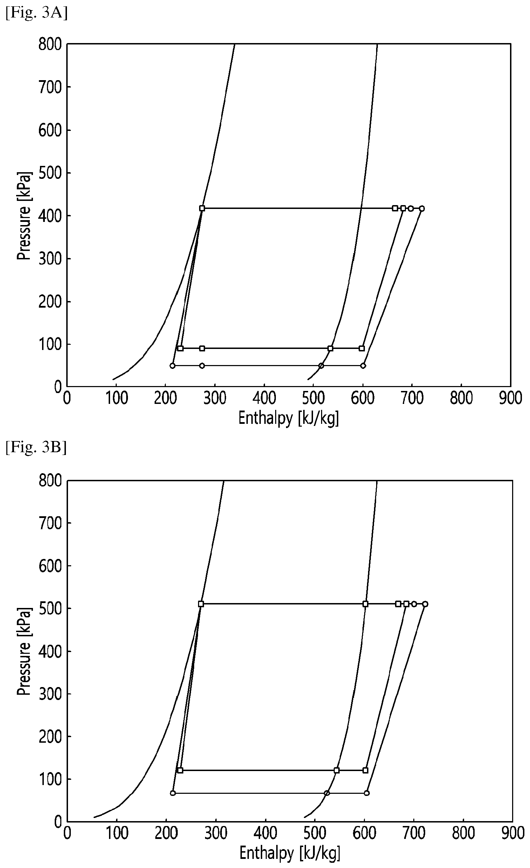

Figs. 3A and 3B are tables for comparison of the refrigeration cycle in each case. Fig. 3A is a graph showing the refrigeration cycle when only isobutane is used. Fig. 3B is a graph showing the refrigeration cycle when the non-azeotropic mixed refrigerant is used.

In the experiment according to Figs. 3A-3B, it can be seen that when the non-azeotropic mixed refrigerant is used, improvement in coefficient of performance was approximately 4.5%.

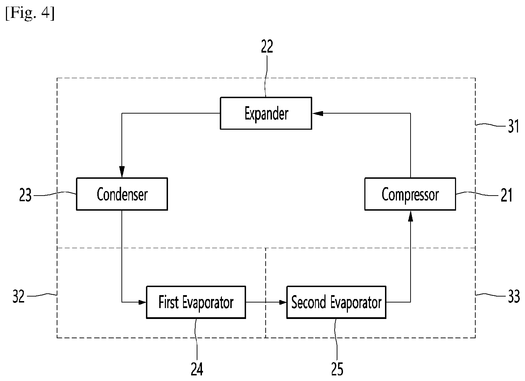

Fig. 4 is a view showing a refrigerating apparatus according to an embodiment. Referring to Fig. 4, a refrigerating apparatus according to an embodiment may include a machine room 31, a freezer compartment 32, and a refrigerating compartment 33. The refrigerating apparatus forms a refrigeration cycle that uses the non-azeotropic mixed refrigerant. In the refrigeration cycle, a compressor 21 that compresses the refrigerant, an expander 22 that expands the compressed refrigerant, a condenser 23 that condenses the expanded refrigerant, and first and second evaporators 24 and 25 that evaporates the condensed refrigerant may be included.

The compressor 21, the expander 22, and the condenser 23 may be provided in the machine room 31. The first evaporator 24 may be provided in the freezer compartment 32. The second evaporator 25 may be provided in the refrigerating compartment 33. The freezer compartment and the refrigerating compartment may be referred to as an "interior space".

A temperature of the non-azeotropic mixed refrigerant may be lower in the first evaporator 24 than in the second evaporator 25. As the first evaporator 24 is placed in the freezer compartment 32, the refrigerating system may be operated more appropriately in a partitioned space of the refrigerating apparatus. Therefore, irreversible loss may be further reduced in the evaporation operation of the evaporator.

### Industrial Applicability

According to embodiments disclosed herein, a composition of a non-azeotropic mixed refrigerant applicable to a general refrigerating apparatus is proposed. According to embodiments disclosed herein, system performance of the refrigeration cycle may be improved by several percents. Improvement in energy consumption efficiency of a refrigerating apparatus, which is widely used in modern life, leads to large reduction in power consumption, thereby greatly contributing to energy savings.
The invention is further defined in the following items:
[Item 1] A non-azeotropic mixed refrigerant comprising isobutane and propane configured to be used as a refrigerant in a refrigeration cycle, the non-azeotropic mixed refrigerant provided in a weight ratio of 50% ≤ isobutane ≤ 90%.
[Item 2] The non-azeotropic mixed refrigerant according to item 1, wherein a gliding temperature difference of the non-azeotropic mixed refrigerant is greater than 4°C.
[Item 3] The non-azeotropic mixed refrigerant according to item 1, wherein the non-azeotropic mixed refrigerant is provided in a weight ratio of 75% ≤ isobutane ≤ 90%.
[Item 4] The non-azeotropic mixed refrigerant according to item 3, wherein a gliding temperature difference of the non-azeotropic mixed refrigerant is 4.1°C to 7.2°C.
[Item 5] The non-azeotropic mixed refrigerant according to item 3, wherein the non-azeotropic mixed refrigerant is provided in a weight ratio of 75% ≤ isobutane ≤ 87%.
[Item 6] The non-azeotropic mixed refrigerant according to item 5, wherein the non-azeotropic mixed refrigerant is provided in a weight ratio of 76% ≤ isobutane ≤ 87%.
[Item 7] A refrigerating apparatus using the non-azeotropic mixed refrigerant according to item 1 as a refrigerant in a refrigeration cycle.
[Item 8] A refrigerating apparatus, comprising:
   a compressor configured to compress a non-azeotropic mixed refrigerant;
   an expander configured to expand the compressed non-azeotropic mixed refrigerant;
   a condenser configured to condense the expanded non-azeotropic mixed refrigerant; and
   an evaporator configured to evaporate the condensed non-azeotropic mixed refrigerant to provide cold air to an interior space of the refrigerating apparatus, wherein the non-azeotropic mixed refrigerant comprises at least two types of hydrocarbons, the at least two types of hydrocarbons comprising:
      at least one first hydrocarbon selected from an upper group having an evaporation temperature of -12°C or more at 1 bar; and
      at least one second hydrocarbon selected from a middle group having an evaporation temperature of -50°C or more and less than -12°C at 1 bar, and wherein a temperature of the non-azeotropic mixed refrigerant at an outlet of the evaporator is lower than a temperature of air introduced into the evaporator.
[Item 9] The refrigerating apparatus according to item 8, wherein a gliding temperature difference of the non-azeotropic mixed refrigerant is greater than a temperature difference between an inlet and an outlet of the air passing through the evaporator.
[Item 10] The refrigerating apparatus according to item 8, wherein the at least one first hydrocarbon is at least one hydrocarbon selected from isopentane, 1,2-butadiene, butene, and isobutane.
[Item 11] The refrigerating apparatus according to item 8, wherein the at least one first hydrocarbon is at least one hydrocarbon selected from N-butane and isobutane.
[Item 12] The refrigerating apparatus according to item 8, wherein the non-azeotropic mixed refrigerant comprises the at least one first hydrocarbon and the at least one second hydrocarbon, and wherein the at least one first hydrocarbon is isobutane, and the at least one second hydrocarbon is propane.
[Item 13] The refrigerating apparatus according to item 12, wherein the non-azeotropic mixed refrigerant is provided in a weight ratio of 76% ≤ isobutane ≤ 87%.
[Item 14] The refrigerating apparatus according to item 8, wherein a pressure difference (△P) of the non-azeotropic mixed refrigerant between the condenser and the evaporator is 340 kPa < △P < 624.7 kPa.
[Item 15] The refrigerating apparatus according to item 8, wherein a condensing pressure (Pd) of the non-azeotropic mixed refrigerant is 393.4 kPa < Pd < 745.3 kPa.
[Item 16] The refrigerating apparatus according to item 8, wherein an evaporation pressure (Ps) of the non-azeotropic mixed refrigerant is 53.5 kPa < Ps < 120.5 kPa.
[Item 17] The refrigerating apparatus according to item 8, wherein a weight ratio of the isobutane is greater than a weight ratio of the propane.
[Item 18] The refrigerating apparatus according to item 8, wherein a temperature difference between an inlet and the outlet of the evaporator is 3°C to 5°C.
[Item 19] A non-azeotropic mixed refrigerant comprising at least two types of hydrocarbons, the at least two types of hydrocarbons comprising: at least one first hydrocarbon selected from an upper group having an evaporation temperature of -12°C or more at 1 bar; and at least one second hydrocarbon selected from a middle group having an evaporation temperature of -50°C or more and less than -12°C at 1 bar, wherein a gliding temperature difference of the non-azeotropic mixed refrigerant upon evaporation is 4°C or more.
[Item 20] The non-azeotropic mixed refrigerant according to item 19, wherein a weight ratio of the at least one first hydrocarbon is 50% or more.
[Item 21] The non-azeotropic mixed refrigerant according to item 19, wherein the at least one first hydrocarbon is isobutane, and the at least one second hydrocarbon is propane, and wherein the non-azeotropic mixed refrigerant is provided in a weight ratio of 50% ≤ isobutane ≤ 90%.
[Item 22] A refrigerating apparatus using the non-azeotropic mixed refrigerant according to item 19 as a refrigerant in a refrigeration cycle.

## Claims

1. A non-azeotropic mixed refrigerant comprising isobutane and propane which is a refrigerant in a refrigeration cycle, the non-azeotropic mixed refrigerant having a weight ratio of 50% ≤ isobutane ≤ 90%,
wherein a gliding temperature difference of the non-azeotropic mixed refrigerant is greater than 4°C.

2. The non-azeotropic mixed refrigerant according to claim 1, wherein the non-azeotropic mixed refrigerant has a weight ratio of 75% ≤ isobutane ≤ 90%.

3. The non-azeotropic mixed refrigerant according to claim 1, wherein a gliding temperature difference of the non-azeotropic mixed refrigerant is 4.1°C to 7.2°C.

4. The non-azeotropic mixed refrigerant according to claim 2, wherein the non-azeotropic mixed refrigerant has a weight ratio of 75% ≤ isobutane ≤ 87%.

5. The non-azeotropic mixed refrigerant according to claim 2, wherein the non-azeotropic mixed refrigerant has a weight ratio of 76% ≤ isobutane ≤ 87%.

6. A refrigerating apparatus comprising:
a compressor to compress a non-azeotropic mixed refrigerant;
an expander to expand the compressed non-azeotropic mixed refrigerant;
a condenser to condense the expanded non-azeotropic mixed refrigerant; and
two evaporators to evaporate the condensed non-azeotropic mixed refrigerant to provide cold air to an interior space,
wherein the two evaporators include a first evaporator and a second evaporator,
wherein the first evaporator and the second evaporator are provided in series,
wherein the first evaporator is provided in a freezing compartment, and the second evaporator is provided in a refrigerating compartment,
wherein the first evaporator and the second evaporator are sequentially provided in the freezing compartment and the refrigerating compartment to provide an arbitrary temperature atmosphere to each partitioned space, and
wherein a temperature difference between air and the evaporated non-azeotropic mixed refrigerant in each evaporator is reduced to reduce irreversibility occurring during heat exchange.

7. The refrigerating apparatus according to claim 6, wherein the non-azeotropic mixed refrigerant consists of isobutane and propane.

8. The refrigerating apparatus according to claim 6, wherein a gliding temperature difference of the non-azeotropic mixed refrigerant is greater than a temperature difference between an inlet and an outlet of air passing through the two evaporators.

9. The refrigerating apparatus according to claim 6, wherein a pressure difference (ΔP) of the non-azeotropic mixed refrigerant between the condenser and the two evaporators is 340 kPa < ΔP < 624.7 kPa.

10. The refrigerating apparatus according to claim 6, wherein a condensing pressure (Pd) of the non-azeotropic mixed refrigerant is 393.4 kPa < Pd < 745.3 kPa.

11. The refrigerating apparatus according to claim 6, wherein an evaporation pressure (Ps) of the non-azeotropic mixed refrigerant is 53.5 kPa < Ps < 120.5 kPa.

12. The refrigerating apparatus according to claim 7, wherein a weight ratio of the isobutane is greater than a weight ratio of the propane.

13. The refrigerating apparatus according to claim 6, wherein a temperature difference between an inlet and an outlet of the evaporators is 3°C to 5°C.
